# EUROPÄISCHE PATENTSCHRIFT

(11) **EP 3 311 039 B1**
(45) Veröffentlichungstag und Bekanntmachung des Hinweises auf die Patenterteilung: **18.09.2019**
(21) Anmeldenummer: 16724357.5
(22) Anmeldetag: 17.05.2016
(51) Int. Cl.: F16C 11/06

(54) **KUGELGELENK**
BALL JOINT
ARTICULATION À ROTULE

(30) Priorität: 16.06.2015 DE 102015211005
(43) Veröffentlichungstag der Anmeldung: 25.04.2018
(73) Patentinhaber: ZF Friedrichshafen AG, 88046 Friedrichshafen (DE)
(72) Erfinder: GRÄBER, Jürgen, 32351 Stemwede (DE); HOPKINSON, Harold, Farmington Hills, MI 48331 (US); EULERICH, Wolfgang, 49086 Osnabrück (DE)
(86) Internationale Anmeldenummer: PCT/EP2016/060962
(87) Internationale Veröffentlichungsnummer: WO 2016/202514

(56) Entgegenhaltungen:
- WO-A1-2013/143582
- DE-A1- 2 757 198
- DE-A1- 10 005 979
- DE-A1-102005 030 747
- DE-A1-102007 008 748

## Beschreibung

Die Erfindung betrifft ein Kugelgelenk mit einem einen Innenraum und eine Zapfenöffnung umfassenden Gehäuse, dessen Innenraum in einem der Zapfenöffnung zugewandten Bereich eine um eine axiale Mittellängsachse herum verlaufende Innenumfangsfläche aufweist, einer in dem Innenraum angeordneten und zu der Zapfenöffnung hin offenen Kugelschale, die auf ihrer der Zapfenöffnung zugewandten Seite einen Überdeckungsbereich aufweist, der in Richtung der Zapfenöffnung gegenüber der Mittellängsachse nach innen geneigt ist und zusammen mit der Innenumfangsfläche des Gehäuses einen Ringraum begrenzt, einem eine Gelenkkugel umfassenden Kugelzapfen, der mit seiner Gelenkkugel bewegbar in der Kugelschale gelagert ist und sich durch die Zapfenöffnung hindurch aus dem Gehäuse heraus erstreckt, und einem in den Ringraum eingesetzten und axial zwischen der Kugelschale und einer im Bereich der Zapfenöffnung vorgesehenen Innenschulter des Gehäuses festgelegten Verschlussring, der eine an der Innenumfangsfläche des Gehäuses anliegende Außenumfangsfläche und eine an einem Anlagebereich des Überdeckungsbereichs der Kugelschale anliegende und in Richtung der Zapfenöffnung gegenüber der Mittellängsachse nach innen geneigte Anlagefläche aufweist.

Aus der DE 10 2007 008 748 A1 ist ein derartiges Kugelgelenk bekannt. Hierbei liegt ein Keilring einerseits an einer Kugelschale und andererseits über Zwischenschaltung eines federelastischen Elementes an einem Verschlussring an. Hierbei ist der Keilring als ein offener Ring und der Verschlussring als ein geschlossener Ring ausgebildet.

Der DE 27 57 198 A1 ist ein Kugelgelenk mit einem Verschlussring zu entnehmen, der eine Trennfuge aufweist.

Die DE 100 05 979 A1 offenbart ein Kugelgelenk bestehend aus einem wenigstens einseitig offenen Gelenkgehäuse mit einer Gehäuseausnehmung, einem in der Gehäuseausnehmung mit seiner mit einem Oberflächenschutz versehenen Gelenkkugel gelagerten Gelenkzapfen, dessen Zapfenabschnitt aus einer Gehäuseöffnung herausragt, einer zwischen dem Gelenkgehäuse und der Gelenkkugel angeordneten Lagerschale sowie einem die Gehäuseausnehmung des Gelenkgehäuses verschließenden und die darin eingeordnete Lagerschale im Gelenkgehäuse verspannenden Verschlussring, der mit seiner Innenkontur durch eine Abschrägung oder einen ausgebildeten Radius der Außenkontur der Lagerschale im Wesentlichen folgt, wobei der in das Gelenkgehäuse einzusetzende Verschlussring in dem Gelenkgehäuse lagefixiert ist und auf der Seite der Gehäuseöffnung, durch die der Zapfenabschnitt des Gelenkzapfens aus dem Gelenkgehäuse herausragt, eine unter elastischer Vorspannung an der Gelenkkugel anliegende Dichtlippe aufweist.

Bei herkömmlichen Kugelgelenken ist die Belastung bzw. Spannung häufig nicht homogen. In diesem Fall werden bei Spitzenbelastung einige Bereiche stärker belastet als andere, sodass die Belastbarkeit der Gelenke nicht voll ausgeschöpft wird. Eine Ursache für inhomogene Belastungen sind z.B. Fertigungsungenauigkeiten. Beispielsweise liegt der Verschlussring aufgrund von Fertigungsungenauigkeiten an der Kugelschale an, nicht aber am Gehäuse oder umgekehrt.

Ausgehend hiervon liegt der Erfindung die Aufgabe zugrunde, die Belastbarkeit von Kugelgelenken erhöhen zu können.

Diese Aufgabe wird durch ein Kugelgelenk nach Anspruch 1 gelöst. Bevorzugte Weiterbildungen des Kugelgelenks sind in den Unteransprüchen und in der nachfolgenden Beschreibung gegeben.

Das eingangs genannte Kugelgelenk mit einem einen Innenraum und eine Zapfenöffnung umfassenden Gehäuse, dessen Innenraum in einem der Zapfenöffnung zugewandten Bereich eine um eine axiale Mittellängsachse herum verlaufende, insbesondere zylindrische oder konische, Innenumfangsfläche aufweist, einer in dem Innenraum angeordneten und zu der Zapfenöffnung hin offenen Kugelschale, die auf ihrer der Zapfenöffnung zugewandten Seite einen Überdeckungsbereich aufweist, der in Richtung der Zapfenöffnung gegenüber der Mittellängsachse nach innen geneigt ist und zusammen mit der Innenumfangsfläche des Gehäuses einen Ringraum begrenzt, einem eine Gelenkkugel umfassenden Kugelzapfen, der mit seiner Gelenkkugel bewegbar in der Kugelschale gelagert ist und sich durch die Zapfenöffnung hindurch aus dem Gehäuse heraus erstreckt, und einem in den Ringraum eingesetzten und axial zwischen der Kugelschale und einer im Bereich der Zapfenöffnung vorgesehenen Innenschulter des Gehäuses festgelegten Verschlussring, der eine an der Innenumfangsfläche des Gehäuses anliegende, insbesondere zylindrische oder konische, Außenumfangsfläche und eine an einem Anlagebereich des Überdeckungsbereichs der Kugelschale anliegende und in Richtung der Zapfenöffnung gegenüber der Mittellängsachse nach innen geneigte Anlagefläche aufweist, wird derart weitergebildet, dass der Verschlussring als offener Ring ausgebildet ist. Insbesondere ist der Verschlussring quer zur Mittellängsachse zwischen der Kugelschale und dem Gehäuse angeordnet.

Der Verschlussring wird in den Ringraum in axialer Richtung eingedrückt, bis er sowohl an der Innenumfangsfläche des Gehäuses als auch am Überdeckungsbereich der Kugelschale anliegt. Dabei wird der Verschlussring z.B. aufgeweitet oder zusammengedrückt, was aufgrund seiner offenen Ausgestaltung möglich ist. Somit können Fertigungsungenauigkeiten ausgeglichen werden.

Der offene Verschlussring weist insbesondere eine Trennfuge auf, die vorzugsweise quer zur Mittellängsachse und/oder in Richtung der Mittellängsachse verläuft. Bevorzugt liegt die Trennfuge in einer die Mittellängsachse umfassenden Ebene. Die Trennfuge kann auch als Schlitz bezeichnet werden, sodass der Verschlussring auch als geschlitzter oder einfach geschlitzter Ring bezeichnet werden kann. Der Schlitz des Verschlussrings ist oder wird bevorzugt senkrecht zu einer Hauptbelastungsrichtung des Kugelgelenks und/oder der Kugelschale positioniert. Der Verschlussring ist vorzugsweise rotationssymmetrisch oder im Wesentlichen rotationssymmetrisch zur Mittelängsachse ausgebildet. Der Ausdruck im Wesentlichen rotationssymmetrisch" berücksichtigt insbesondere die Trennfuge des Verschlussrings.

Die Außenumfangsfläche des Verschiussrings steht vorzugsweise nicht in formschlüssiger Verbindung mit der Innenumfangsfläche des Gehäuses. Die beispielsweise für eine solche formschlüssige Verbindung an der Außenumfangsfläche des Verschlussrings vorzusehenden Ausformungen, wie sie z.B. aus der DE 100 05 979 A1 bekannt sind, können das Ausgleichen von Fertigungsungenauigkeiten beeinträchtigen. Bevorzugt liegt die Außenumfangsfläche des Verschlussrings lediglich an der Innenumfangsfläche des Gehäuses an. Vorzugsweise stehen die Außenumfangsfläche des Verschlussrings und die Innenumfangsfläche des Gehäuses in rein kraftschlüssiger Verbindung miteinander. Die Innenumfangsfläche des Gehäuses ist bevorzugt zylindrisch oder konisch, insbesondere in dem Bereich, in dem die Außenumfangsfläche des Verschlussrings an der Innenumfangsfläche des Gehäuses anliegt und/oder in dem oder einem der Zapfenöffnung zugewandten Bereich. Die Außenumfangsfläche des Verschlussrings ist bevorzugt zylindrisch oder konisch.

Die Kugelschale umfasst bevorzugt einen hohlkugelförmigen Lagerraum, in dem insbesondere die Gelenkkugel sitzt. Vorteilhaft ist im Überdeckungsbereich der Kugelschale, insbesondere mittig, eine Durchtrittsöffnung vorgesehen, durch welche hindurch sich der Kugelzapfen aus der Kugelschale heraus erstreckt. Die Mittellängsachse verläuft insbesondere durch den Mittelpunkt der Gelenkkugel und/oder durch den Mittelpunkt des hohlkugelförmigen Lagerraums hindurch. Die Kugelschale ist z.B. als Umformschale ausgebildet. Bevorzugt ist die Kugelschale ungeschlitzt. Vorteilhaft ist die Kugelschale rotationssymmetrisch zur Mittelängsachse ausgebildet.

Es kann der Fall eintreten, dass die Kugelschale beim Eindrücken des Verschlussrings in den Ringraum derart verformt wird, dass die Gelenkkugel in der Kugelschale verklemmt und/oder festgeklemmt wird. Aber auch geringfügigere Verformungen der Kugelschale, die noch nicht zu einem Verklemmen und/oder Festklemmen der Gelenkkugel führen, können eine inhomogene Spannungsverteilung in der Kugelschale zur Folge haben. Aus diesem Grund wird die Kugelschale nach dem Festlegen des Verschlussrings zwischen der Kugelschale und der Innenschulter des Gehäuses bevorzugt einem Temperverfahren unterzogen. Bei dem Temperverfahren wird die Kugelschale erwärmt, sodass sich homogene Spannungsverhältnisse in der Kugelschale einstellen können und/oder Spannungsinhomogenitäten in der Kugelschale abgebaut werden. Insbesondere ist die Kugelschale somit nach dem Festlegen des Verschlussrings zwischen der Kugelschale und der Innenschulter des Gehäuses einem Temperverfahren unterzogen worden.

Die Kugelschale besteht bevorzugt aus Kunststoff, insbesondere aus einem thermoplastischen Kunststoff. Beispielsweise besteht die Kugelschale aus Polyoxymethylen, Polyamid, Polyetheretherketon, Polyphthalamid oder Polyetherimid. Die Mittellängsachse bildet insbesondere die Rotationsachse der Innenumfangsfläche des Gehäuses. Die Innenumfangsfläche des Gehäuses verläuft somit bevorzugt symmetrisch um die Mittellängsachse herum. Das Gehäuse besteht bevorzugt aus Metall, insbesondere aus Stahl.

Der Kugelzapfen besteht bevorzugt aus Metall, insbesondere aus Stahl. Vorzugsweise bildet der Kugelzapfen einen Rotationskörper.

Der Verschlussring besteht bevorzugt aus Metall, beispielsweise aus Stahl. Vorteilhaft ist das Material des Verschlussrings deutlich steifer als das Material der Kugelschale. Insbesondere ist der Elastizitätsmodul des Materials des Verschlussrings deutlich größer als der Elastizitätsmodul des Materials der Kugelschale. Vorzugsweise ist der Elastizitätsmodul des Materials des Verschlussrings gleich oder annähernd gleich dem Elastizitätsmodul des Materials des Gehäuses. Bevorzugt ist und/oder wird der Verschlussring aus Draht und/oder einem Drahtprofil hergestellt. Hierdurch ist eine besonders kostengünstige Möglichkeit zur Herstellung des Verschlussrings geschaffen.

Gemäß einer Weiterbildung ist die Dicke und/oder das Dickenprofil der Kugelschale derart gewählt, dass bei einer Hauptbelastung der Kugelschale in einer Richtung, die insbesondere quer zur Mittelängsachse verläuft, die Belastung der Kugelschale im Überdeckungsbereich und/oder im Anlagebereich reduziert ist. Die vorgenannte Richtung, in der die Hauptbelastung der Kugelschale erfolgt, kann z.B. als Hauptbelastungsrichtung bezeichnet werden. Für die Wahl einer geeigneten Dicke und/oder eines geeigneten Dickenprofils der Kugelschale gibt es mehrere Möglichkeiten, die nachfolgend aufgeführt sind und sowohl in Alleinstellung als auch in Kombination verwirklicht sein können.

Vorteilhaft weist die Kugelschale entlang der Mittellängsachse im Überdeckungsbereich und/oder im Anlagebereich eine konstante oder annähernd konstante Dicke in der oder in einer Hauptbelastungsrichtung auf. Bevorzugt verläuft die Hauptbelastungsrichtung quer zur Mittellängsachse.

Insbesondere weist die Kugelschale entlang der Mittellängsachse im Überdeckungsbereich und/oder im Anlagebereich eine konstante oder annähernd konstante Dicke quer zur Mittellängsachse auf.

Bevorzugt nimmt das Dickenprofil und/oder die Dicke der Kugelschale mit abnehmendem axialem Abstand zur Zapfenöffnung, insbesondere kontinuierlich, ab, und/oder das Dickenprofil und/oder die Dicke der Kugelschale nimmt bevorzugt vom Äquator der Kugelschale bis zum Pol der Kugelschale hin, insbesondere kontinuierlich, zu. Diese Dicke der Kugelschale bezieht sich vorzugsweise auf den Mittelpunkt der Gelenkkugel. Somit kann diese Dicke auch als radiale Dicke bezeichnet werden, insbesondere wenn sie sich auf ein Kugelkoordinatensystem mit dem Mittelpunkt der Gelenkkugel als Ursprung bezieht. Der Äquator der Kugelschale liegt insbesondere auf einer quer zur Mittellängsachse und durch den Mittelpunkt der Gelenkkugel verlaufenden Ebene und bildet vorzugsweise einen Großkreis. Der Pol der Kugelschale wird insbesondere durch den der Zapfenöffnung abgewandten Endbereich der Kugelschale gebildet.

Ist die Dicke der Kugelschale im Überdeckungsbereich zu groß, kann die Kugelschale dort zu weich werden. Insbesondere nimmt die effektive Überdeckung der Gelenkkugel mit zunehmender Dicke der Kugelschale im Überdeckungsbereich ab. Somit werden die Auszugskräfte verringert, die erforderlich sind, um den Kugelzapfen in axialer Richtung aus dem Gehäuse auszuziehen, was nachteilig ist. Bevorzugt ist die Dicke der Kugelschale im Überdeckungsbereich daher möglichst gering. Eine geringe Dicke der Kugelschale im Überdeckungsbereich erhöht die Auszugskräfte, die erforderlich sind, um den Kugelzapfen in axialer Richtung aus dem Gehäuse auszuziehen. Ferner wird durch eine geringe Dicke der Kugelschale Bauraum eingespart. Die Reduzierung der Dicke der Kugelschale im Überdeckungsbereich findet seine Grenze allerdings darin, dass die Kugelschale im Überdeckungsbereich dick genug sein sollte, um fertiguhgsbedingte Unregelmäßigkeiten ausgleichen zu können.

Der Verschlussring weist eine der Zapfenöffnung zugewandte und in Richtung der Zapfenöffnung gegenüber der Mittellängsachse nach außen geneigte Öffnungsfläche auf, die eine freie Fläche ist. Diese Fläche dient z.B. als ein die Auslenkung des Kugelzapfens begrenzender Anschlag. Ferner kann diese Fläche beim Einpressen des Verschlussrings in das Gehäuse für einen Gegenhalter genutzt werden.

Die Innenschulter des Gehäuses liegt außerhalb einer durch die Öffnungsfläche des Verschlussrings definierten Kegelfläche und/oder eines durch die Öffnungsfläche des Verschlussrings definierten Kegels oder Raumwinkels. Somit ist sichergestellt, dass die Auslenkung des Kugelzapfens durch den Verschlussring und nicht durch die Innenschulter begrenzt wird. In einem möglichen Grenzfall endet der innere Rand der Innenschulter insbesondere auf oder im Bereich der Kegelfläche und/oder außen an dem Kegel oder dem Raumwinkel und/oder im äußeren Bereich des Kegels oder Raumwinkels. Bei der Kegelfläche und/oder dem Kegel handelt es sich insbesondere um eine fiktive Kegelfläche und/oder um einen fiktiven Kegel.

Auf der der Zapfenöffnung abgewandten Seite des Verschlussrings geht die Außenumfangsfläche des Verschlussrings bevorzugt in die Anlagefläche des Verschlussrings über. Dieser Übergang ist vorzugsweise abgerundet. Auf der der Zapfenöffnung zugewandten Seite des Verschlussrings geht die Außenumfangsfläche des Verschlussrings bevorzugt in die Öffnungsfläche des Verschlussrings über. Dieser Übergang ist vorzugsweise abgerundet. An dem der Kugelschale zugewandten Innenumfang des Verschlussrings geht die Anlagefläche des Verschlussrings bevorzugt in die Öffnungsfläche des Verschlussrings über. Dieser Übergang ist vorzugsweise abgerundet.

Der Verschlussring ist im Querschnitt bevorzugt keilförmig und/oder dreieckig ausgebildet. Die Seiten des keilförmigen Querschnitts sind z.B. durch die Außenumfangsfläche des Verschlussrings und durch die Anlagefläche des Verschlussrings definiert. Die Seiten des dreieckigen Querschnitts sind z.B. durch die Außenumfangsfläche des Verschlussrings, durch die Anlagefläche des Verschlussrings und durch die Öffnungsfläche des Verschlussrings definiert. Die Außenumfangsfläche des Verschlussrings und die Anlagefläche des Verschlussrings schließen insbesondere einen spitzen Winkel ein.

Der Verschlussring füllt den Ringraum im Wesentlichen vollständig aus. Der Ringraum ist im Querschnitt vorzugsweise keilförmig ausgebildet. Die Seiten des keilförmigen Querschnitts sind z.B. durch die Innenumgangsfläche des Gehäuses und durch den Überdeckungsbereich und/oder den Anlagebereich der Kugelschale definiert. Die Innenumgangsfläche des Gehäuses und der Überdeckungsbereich und/oder Anlagebereich der Kugelschale schließen insbesondere einen spitzen Winkel ein.

Bevorzugt ist der Verschlussring auf und/oder mit seiner der Zapfenöffnung abgewandten Seite oder Stirnseite, insbesondere axial, an der Kugelschale abgestützt. Vorzugsweise ist der Verschlussring auf und/oder mit seiner der Zapfenöffnung abgewandten Seite oder Stirnseite, insbesondere axial, an dem Gehäuse unter Zwischenschaltung der Kugelschale abgestützt. Bevorzugt ist der Verschlussring auf und/oder mit seiner der Zapfenöffnung abgewandten Seite oder Stirnseite axial nicht oder nicht unmittelbar am Gehäuse abgestützt, sodass der Verschlussring insbesondere weit genug in den Ringraum eingedrückt oder eingerückt werden kann. Vorzugsweise liegt der Verschlussring auf und/oder mit seiner der Zapfenöffnung abgewandten Seite oder Stirnseite axial nicht oder nicht unmittelbar am Gehäuse an. Die der Zapfenöffnung abgewandte Stirnseite des Verschlussrings ist insbesondere eine axiale Stirnseite des Verschlussrings.

Die Kugelschale ist bevorzugt zwischen dem Verschlussring und der Gelenkkugel und/oder dem Gehäuse eingeklemmt. Allerdings kann es vorkommen, dass die Kugelschale nicht ausreichend gegen Verdrehung gesichert ist. Bevorzugt sind an der Anlagefläche des Verschlussrings Erhebungen und/oder Vertiefungen vorgesehen, die mit der Kugelschale formschlüssig ineinander greifen. Diese Erhebungen und/oder Vertiefungen können z.B. in Form einer Rändelung oder in Form von Sicken und/oder Aufwerfungen ausgebildet sein, die beispielsweise den Sicken benachbart angeordnet sind. Bevorzugt weisen die Erhebungen und/oder Vertiefungen in Umfangsrichtung des Verschlussrings einen Abstand zueinander auf. Insbesondere sind in der Anlagefläche des Verschlussrings Sicken vorgesehen und/oder eingewalzt, in welche die Kugelschale eingreift und/oder eingedrückt ist. Hierdurch kann die Kugelschale gegen ein Verdrehen gesichert werden. Alternativ oder ergänzend können auch an einem mit der Kugelschale in Berührung stehenden Innenwandbereich des Gehäuses Erhebungen und/oder Vertiefungen vorgesehen sein, die mit der Kugelschale formschlüssig ineinander greifen. Diese Erhebungen und/oder Vertiefungen weisen in Umfangsrichtung des Gehäuses bevorzugt einen Abstand zueinander auf.

Durch die Erfindung wird insbesondere ein Kugelgelenk geschaffen, bei dem das Dickenprofil der Kugelschale so ausgelegt ist oder wird, dass bei einer Hauptbelastung quer zur Mittellängsachse die Belastung auf der Öffnungsseite reduziert wird. Wenn die Kugelschale auf der gehäuseseitigen Seite zu steif ist, besteht die Gefahr, dass die Belastungen auf der kleineren und schwächeren Seite noch zusätzlich weiter erhöht werden. Bevorzugt werden die Steifigkeiten daher in den beiden Hälften der Kugelschale aufeinander abgestimmt. Dies gelingt insbesondere dann, wenn das Dickenprofil der Kugelschale in Richtung der Mittellängsachse von ihrem Äquator zu ihrem der Zapfenöffnung zugewandten Ende hin kontinuierlich abnimmt. Um diese Außenkontur optimal und preisgünstig abzustützen, wird der Verschlussring eingesetzt.

Der Verschlussring weist vorzugsweise ein oder mehrere der nachfolgend angegebenen Merkmale in Alleinstellung oder in Kombination auf:
- Umschlingung und Abstützung der Kugelschale bis zum maximal möglichen Punkt (hierdurch kann die axiale Belastbarkeit erhöht werden);
- komplette Ausnutzung des Raumes, der bei max. Auswinkelung des Kugelzapfens vorhanden ist (hierdurch kann die Steifigkeit des Rings erhöht werden);
- der Verschlussring füllt den keilförmigen Ringraum zwischen Kugelschale und Gehäuse optimal aus. Insbesondere überträgt der Verschlussring Kräfte durch Stauchung nicht durch Biegung wie bei herkömmlichen flachen Verschlussringen;
- der Verschlussring ist geschlitzt, sodass er sich im Umfang anpassen und den keilförmigen Ringraum optimal ausfüllen kann (selbstjustierend, d.h. optimale Passung und Toleranzausgleich, da der Verschlussring maßlich nicht überbestimmt ist; der verbleibende Schlitz kann senkrecht zur Hauptkraftrichtung und/oder Hauptbelastungsrichtung positioniert werden);
- der Verschlussring ist klein (d.h. insbesondere so dünnwandig wie möglich), sodass das Gehäuse dickwandiger und fester ausgeführt werden kann;
- der Verschlussring überträgt Auszugskräfte auch durch Reibung (nahe Selbsthemmung) und entlastet so die Innenschulter oder Rollkante;
- der Verschlussring wird aus einem preisgünstigen Drahtprofil gebogen, (andere Ringe werden ausgestanzt oder bearbeitet, dabei fällt viel Material ab, welches den Preis erhöht).

Der Verschlussring weist bevorzugt eine Geometrie auf, durch welche die Belastbarkeit des Kugelgelenks erhöht werden kann. Beispielsweise kann der Verschlussring, vorzugsweise an seiner Anlagefläche, auch eine Hohlkontur oder konkave Kontur aufweisen, die insbesondere der Außenkontur der Kugelschale folgt. Der Neigungswinkel der Anlagefläche und/oder die, Hohlkontur können ferner beliebig ausgelegt und optimiert werden. Auch kann der Verschlussring preisgünstig hergestellt werden. Bei der Verwendung von Profildraht zur Herstellung des Verschlussrings kann das Material nahezu vollständig ausgenutzt werden.

Bei dem Kugelgelenk handelt es sich bevorzugt um ein Kugelgelenk für ein Kraftfahrzeug. Insbesondere ist das Kugelgelenk zum Einsatz in einer Rad- oder Achsaufhängung eines Kraftfahrzeugs vorgesehen. Beispielsweise handelt es sich bei dem Kugelgelenk um ein Traggelenk. Insbesondere sind das Gehäuse und der Kugelzapfen jeweils mit einem Radaufhängungsbauteil eines Kraftfahrzeugs verbunden.

Die Erfindung betrifft ferner die Verwendung eines Verschlussrings für ein Kugelgelenk mit einem einen Innenraum und eine Zapfenöffnung umfassenden Gehäuse, dessen Innenraum in einem der Zapfenöffnung zugewandten Bereich eine um eine axiale . Mittellängsachse herum verlaufende Innenumfangsfläche aufweist, einer in dem Innenraum angeordneten und zu der Zapfenöffnung hin offenen Kugelschale, die auf ihrer der Zapfenöffnung zugewandten Seite einen Überdeckungsbereich aufweist, der in Richtung der Zapfenöffnung gegenüber der Mittellängsachse nach innen geneigt ist und zusammen mit der Innenumfangsfläche des Gehäuses einen Ringraum begrenzt, und einem eine Gelenkkugel umfassenden Kugelzapfen, der mit seiner Gelenkkugel bewegbar in der Kugelschale gelagert ist und sich durch die Zapfenöffnung hindurch aus dem Gehäuse heraus erstreckt, wobei der Verschlussring in den Ringraum eingesetzt und axial zwischen der Kugelschale und einer im Bereich der Zapfenöffnung vorgesehenen Innenschulter des Gehäuses festgelegt ist oder wird, wobei der Verschlussring eine an der Innenumfangsfläche des Gehäuses anliegende Außenumfangsfläche und eine an einem Anlagebereich des Überdeckungsbereichs der Kugelschale anliegende und in Richtung der Zapfenöffnung gegenüber der Mittellängsachse nach innen geneigte Anlagefläche aufweist, und wobei der Verschlussring als offener Ring ausgebildet ist oder wird.

Die Verwendung kann gemäß allen im Zusammenhang mit dem Kugelgelenk erläuterten Ausgestaltungen weitergebildet sein. Ferner kann das Kugelgelenk gemäß allen im Zusammen mit der Verwendung erläuterten Ausgestaltungen weitergebildet sein.

Bevorzugt wird der. Verschlussring mit Druck in den Ringraum eingesetzt, sodass auch davon gesprochen werden kann, dass der Verschlussring in den Ringraum eingedrückt wird. Insbesondere wird der Verschlussring in den Ringraum in axialer Richtung eingedrückt und/oder unter Druck eingesetzt, bis er sowohl an der Innenumfangsfläche des Gehäuses als auch am Überdeckungsbereich der Kugelschale anliegt.

Beim Einsetzen und/oder Eindrücken des Verschlussrings in den Ringraum wird insbesondere die Kugelschale verformt. Dies kann zu einer inhomogenen Spannungsverteilung in der Kugelschale und somit zu einer Schwergängigkeit oder zu einem Verklemmen der Gelenkkugel in der Kugelschale führen. Bevorzugt wird die Kugelschale nach dem Festlegen des Verschlussrings zwischen der Kugelschale und der Innenschulter des Gehäuses einem Temperverfahren unterzogen. Somit kann eine inhomogene Spannungsverteilung in der Kugelschale abgebaut werden.

Gemäß einer Ausgestaltung wird beim Einsetzen und/oder Festlegen des Verschlussrings die Kugelschale verformt, sodass die Gelenkkugel in der Kugelschale verklemmt wird. Anschließend wird die Kugelschale dem oder einem Temperverfahren unterzogen, wodurch die Gelenkkugel wieder gelöst wird und/oder die Verklemmung der Gelenkkugel wieder aufgehoben wird. Hierdurch kann insbesondere die Leichtgängigkeit der Gelenkkugel gezielt eingestellt werden.

Das axiale Festlegen des Verschlussrings zwischen der Kugelschale und der Innenschulter des Gehäuses erfolgt insbesondere dadurch, dass ein Rand des Gehäuses (Gehäuserand) nach innen umgeformt wird und nach seinem Umformen die Innenschulter bildet. Dieses Umformen erfolgt z.B. durch Verrollen. Die Innenschulter kann somit z.B. auch als Rollkante bezeichnet werden. Unter Verrollen ist insbesondere ein Umformverfahren zu verstehen, wobei der Gehäuserand mittels einer druckbelasteten Rolle nach innen umgebogen wird. Alternativ kann die Innenschulter aber auch durch ein separates Bauteil gebildet sein, welches am Gehäuse befestigt ist oder wird. Die Innenschulter ist insbesondere umlaufend ausgebildet.

Die Erfindung wird nachfolgend anhand bevorzugter Ausführungsformen unter Bezugnahme auf die Zeichnung beschrieben. In der Zeichnung zeigen:
- Fig. 1: einen Längsschnitt durch ein Kugelgelenk gemäß einer ersten Ausführungsform,
- Fig. 2: eine vergrößerte Ansicht des in Fig. 1 mit A gekennzeichneten Bereichs,
- Fig. 3: eine perspektivische Ansicht des aus Fig. 1 ersichtlichen Verschlussrings in Einzeldarstellung,
- Fig. 4: einen Längsschnitt durch ein Kugelgelenk gemäß einer zweiten Ausführungsform,
- Fig. 5: eine vergrößerte Ansicht des in Fig. 4 mit B gekennzeichneten Bereichs,
- Fig. 6: einen Längsschnitt durch ein Kugelgelenk gemäß einer dritten Ausführungsform und
- Fig. 7: eine vergrößerte Ansicht des in Fig. 6 mit E gekennzeichneten Bereichs.

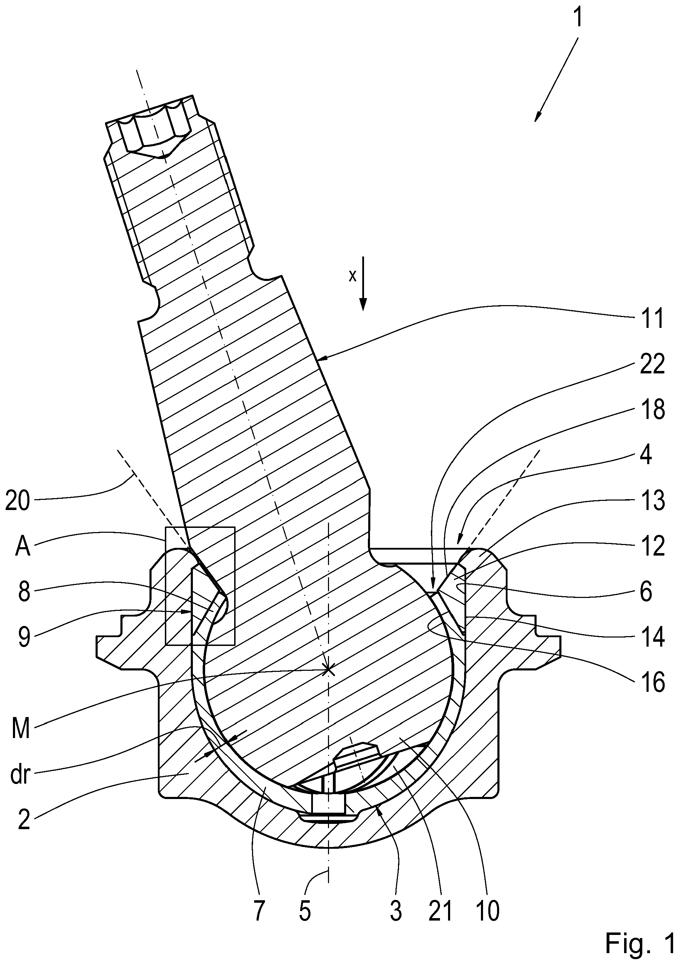

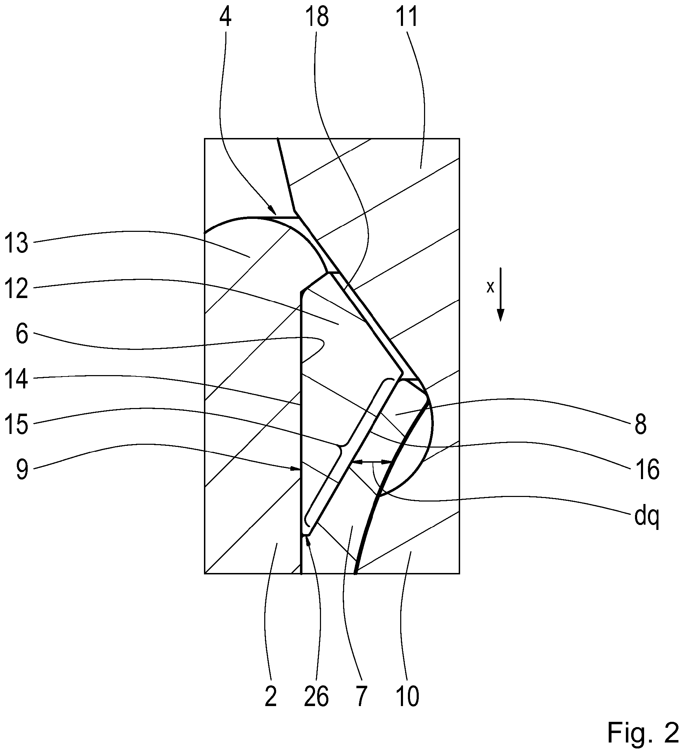

Aus Fig. 1 ist ein Längsschnitt durch ein Kugelgelenk 1 gemäß einer ersten Ausführungsform ersichtlich, welches ein Gehäuse 2 mit einem Innenraum 3 und einer Zapfenöffnung 4 aufweist, wobei der Innenraum 3 in einem der Zapfenöffnung 4 zugewandten Bereich eine um eine axiale Mittellängsachse 5 herum verlaufende, zylindrische Innenumfangsfläche 6 aufweist. In dem Innenraum 3 ist eine zu der Zapfenöffnung 4 hin offenen Kugelschale 7 angeordnet, die auf ihrer der Zapfenöffnung 4 zugewandten Seite einen Überdeckungsbereich 8 aufweist, der in Richtung der Zapfenöffnung 4 gegenüber der Mittellängsachse 5 nach innen geneigt ist und zusammen mit der zylindrischen Innenumfangsfläche 6 des Gehäuses 2 einen Ringraum 9 begrenzt. In der Kugelschale 7 ist ein eine Gelenkkugel 10 umfassenden Kugelzapfen 11 mit seiner Gelenkkugel 10 bewegbar gelagert, der sich durch die Zapfenöffnung 4 hindurch aus dem Gehäuse 2 heraus erstreckt. Eine vergrößerte Darstellung des in Fig. 1 mit A gekennzeichneten Bereichs ist aus Fig. 2 ersichtlich. Die axiale Richtung, in welcher die Mittellängsachse 5 verläuft, ist mit dem Bezugszeichen x gekennzeichnet.

In den Ringraum 9 ist ein Verschlussring 12 eingesetzt, der axial zwischen der Kugelschale 7 und einer im Bereich der Zapfenöffnung 4 vorgesehenen Innenschulter 13 des Gehäuses 2 festgelegt ist. Dabei ist der Verschlussring 12 auf seiner der Zapfenöffnung 4 abgewandten Seite, insbesondere auf seiner der Zapfenöffnung 4 abgewandten Stirnseite 26, lediglich an der Kugelschale 7 und nicht am Gehäuse 2 abgestützt. Ferner ist oder wird der Verschlussring 12 durch die Innenschulter 13 axial gegen die Kugelschale 7 gedrückt, sodass diese unter Vorspannung steht. Der Verschlussring 12 weist eine an der zylindrischen Innenumfangsfläche 6 des Gehäuses 2 anliegende, zylindrische Außenumfangsfläche 14 und eine an einem Anlagebereich 15 des Überdeckungsbereichs 8 der Kugelschale 7 anliegende und in Richtung der Zapfenöffnung 4 gegenüber der Mittellängsachse 5 nach innen geneigte Anlagefläche 16 auf. Die Flächen 14 und 16 bilden im Querschnitt einen in dem Ringraum 9 sitzenden Keil, wobei die zylindrische Innenumfangsfläche 6 des Gehäuses 2 und der Überdeckungsbereich 8 der Kugelschale 7 dem Ringraum 9 im Querschnitt ebenfalls eine keilförmige Gestalt verleihen.

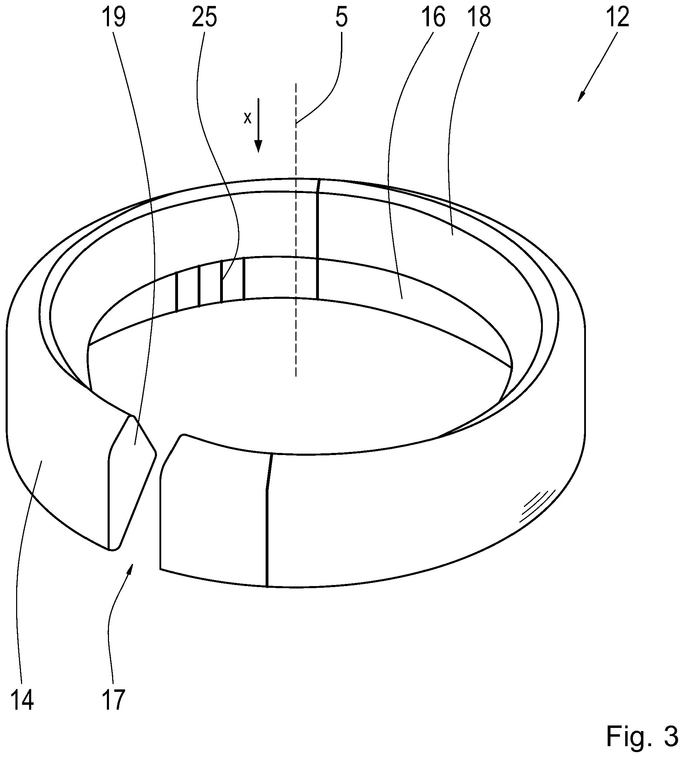

Aus Fig. 3, die den Verschlussring 12 in Einzeldarstellung zeigt, ist ersichtlich, dass der Verschlussring 12 als offener Ring ausgebildet ist und eine quer zur Mittellängsachse 5 verlaufende Trennfuge 17 aufweist, die auch als Schlitz bezeichnet wird. Der Verschlussring 12 weist ferner eine der Zapfenöffnung 4 zugewandte und in Richtung der Zapfenöffnung 4 gegenüber der Mittellängsachse 5 nach außen geneigte freie Öffnungsfläche 18 auf, die einen Anschlag für den Kugelzapfen 11 bildet. Der Verschlussring 12 weist somit eine näherungsweise dreieckige Querschnittsfläche 19 auf, deren Ecken abgerundet sind. Die durch Umbördeln eines Gehäuserands gebildete Innenschulter 13 des Gehäuses 2 liegt dabei außerhalb eines durch die Öffnungsfläche 18 des Verschlussrings 12 definierten Raumwinkels oder fiktiven Kegels 20, der in Fig. 1 gestrichelt angedeutet ist.

Ferner ist aus Fig. 3 ersichtlich, dass in der Anlagefläche 16 des Verschlussrings 12 mehrere Sicken 25 eingebracht sind, die lediglich schematisch angedeutet sind. Selbstverständlich ist es möglich, rings der Mittellängsachse 5 mehr Sicken in der Anlagefläche 16 vorzusehen als gezeigt. Da der Verschlussring 12 gegen die Kugelschale 7 gedrückt ist, formt sich Material der Kugelschale in die Sicken 25 ein, wodurch eine Verdrehsicherung für die Kugelschale 7 erzielt wird.

Aus Fig. 1 ist ersichtlich, dass die bezüglich des Mittelpunkts M der Gelenkkugel 10 radiale Dicke dr der Kugelschale 7 mit abnehmendem axialem Abstand zur Zapfenöffnung 4 abnimmt. Ferner kann Fig. 2 entnommen werden, dass die Dicke dq quer zur Mittellängsachse 5 im Anlagebereich 15 in axialer Richtung x konstant oder näherungsweise konstant ist. Das Kugelgelenk 1 ist somit insbesondere für Hauptbelastungen in einer quer zur Mittellängsachse 5 verlaufenden Richtung ausgelegt.

Die Kugelschale 7 umfasst einen hohlkugelförmigen Lagerraum 21, in dem die Gelenkkugel 10 sitzt. Ferner ist in einem der Zapfenöffnung 4 zugewandten Bereich des Überdeckungsbereich 8 der Kugelschale 7 eine Durchtrittsöffnung 22 vorgesehen, durch welche hindurch sich der Kugelzapfen 11 aus der Kugelschale 7 heraus erstreckt.

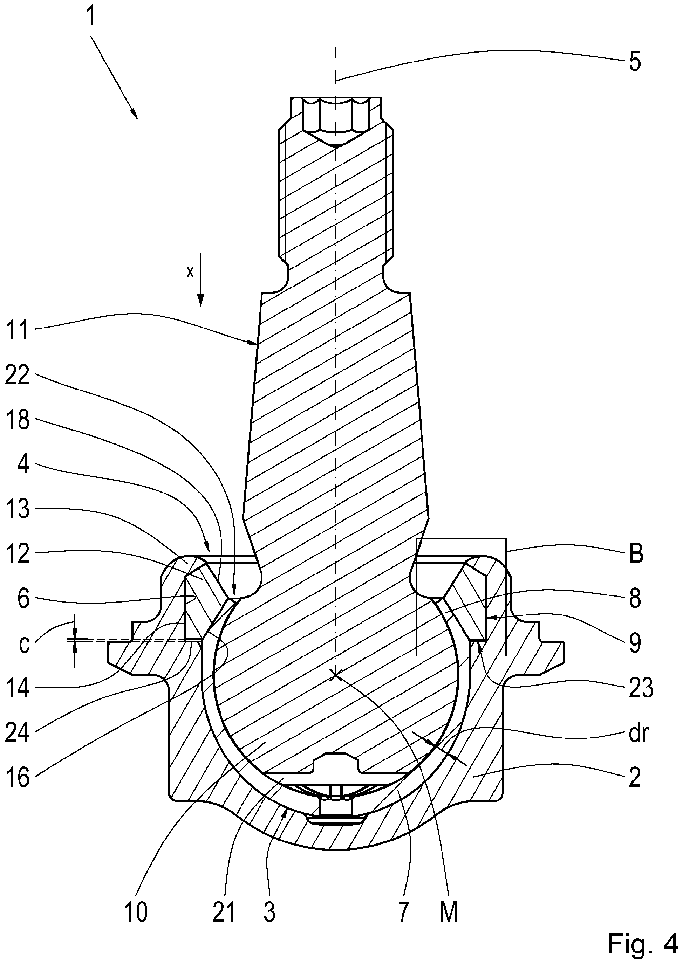

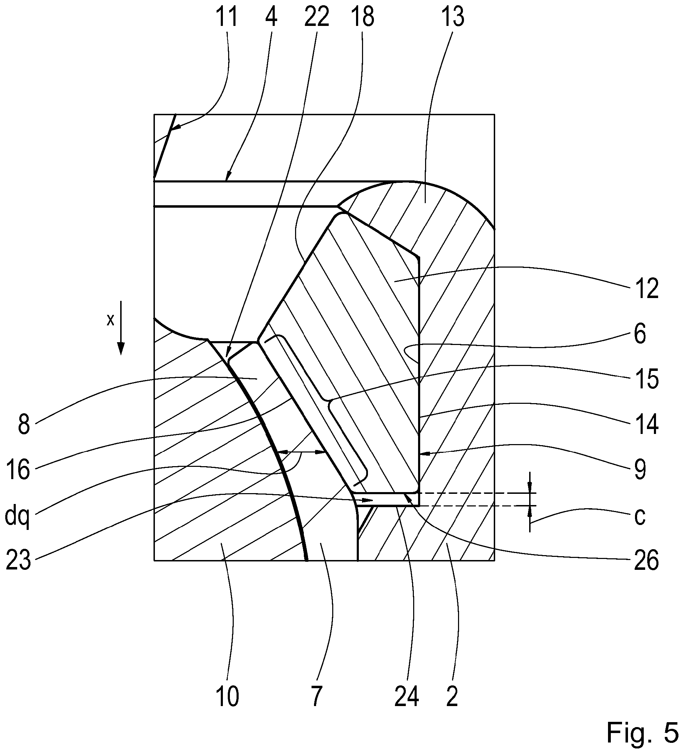

Aus Fig. 4 ist ein Längsschnitt durch ein Kugelgelenk 1 gemäß einer zweiten Ausführungsform ersichtlich, wobei zu der ersten Ausführungsform identische oder ähnliche Merkmale mit denselben Bezugszeichen wie bei der ersten Ausführungsform bezeichnet sind. Ferner zeigt Fig. 5 eine vergrößerte Ansicht des in Fig. 4 mit B gekennzeichneten Bereichs.

Im Unterschied zur ersten Ausführungsform weist der Innenraum 3 in einem der Zapfenöffnung 4 zugewandten Bereich eine Ringnut 23 auf, in der die um die Mittellängsachse 5 herum verlaufende, zylindrische Innenumfangsfläche 6 vorgesehen ist. Der Verschlussring 12 sitzt in der Ringnut 23 und ist in einer quer zur Mittellängsachse 5 verlaufenden Richtung dicker als der Verschlussring der ersten Ausführungsform ausgebildet, sodass der Verschlussring 12 der zweiten Ausführungsform in seinem Querschnitt auch nicht mehr dreieckig oder näherungsweise dreieckig ist. Allerdings weist der Verschlussring 12 auf seiner der Zapfenöffnung 4 abgewandten Stirnseite 26 einen axialen Abstand c zu einer der Zapfenöffnung abgewandten Nutwand 24 der Ringnut 23 auf, sodass der Verschlussring auf seiner der Zapfenöffnung 4 abgewandten Seite axial lediglich an der Kugelschale 7 und nicht am Gehäuse 2 abgestützt ist. Abgesehen von diesen Unterschieden stimmt die zweite Ausführungsform mit der ersten Ausführungsform überein, sodass zur weiteren Beschreibung der zweiten Ausführungsform auf die Beschreibung der ersten Ausführungsform verwiesen wird.

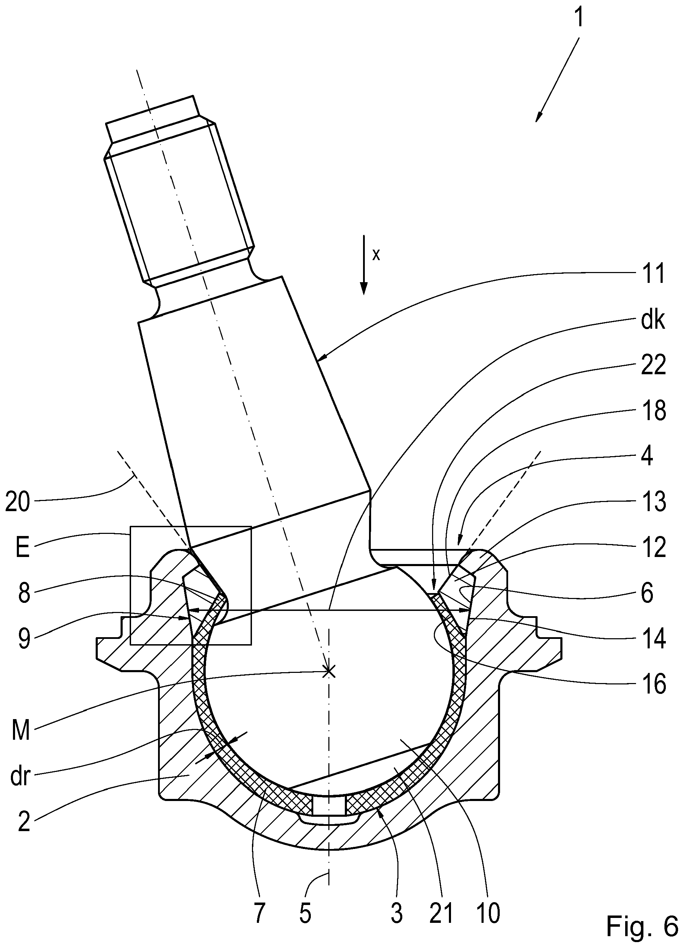

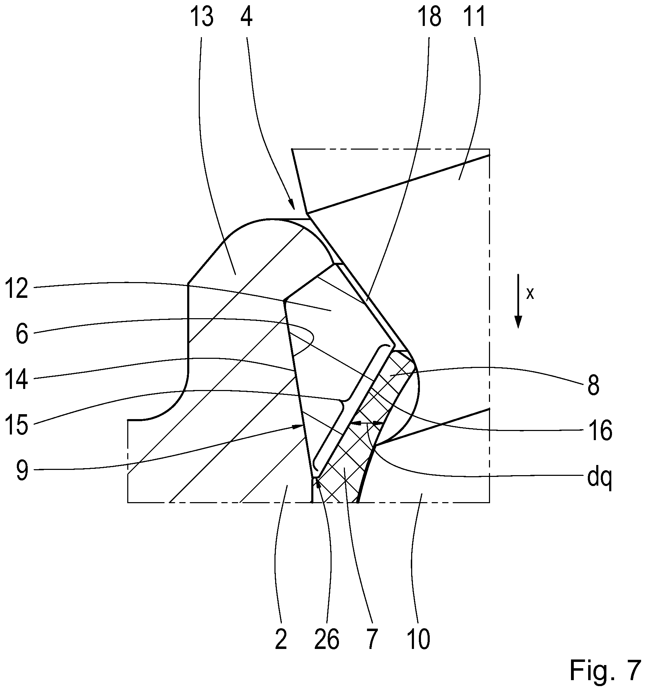

Aus Fig. 6 ist ein Längsschnitt durch ein Kugelgelenk 1 gemäß einer dritten Ausführungsform ersichtlich, wobei zu der ersten Ausführungsform identische oder ähnliche Merkmale mit denselben Bezugszeichen wie bei der ersten Ausführungsform bezeichnet sind. Ferner zeigt Fig. 7 eine vergrößerte Ansicht des in Fig. 6 mit E gekennzeichneten Bereichs.

Die dritte Ausführungsform ist eine Abwandlung der ersten Ausführungsform, wobei im Unterschied zur ersten Ausführungsform der Innenraum 3 in seinem der Zapfenöffnung 4 zugewandten Bereich eine um die axiale Mittellängsachse 5 herum verlaufende, konische Innenumfangsfläche 6 aufweist. Ferner weist der Verschlussring 12 eine an der konischen Innenumfangsfläche 6 des Gehäuses 2 anliegende, konische Außenumfangsfläche 14 auf. Die konischen Flächen 6 und 14 sind dabei jeweils derart ausgebildet, dass sich, insbesondere in Richtung der Mittellängsachse 5 und/oder in axialer Richtung x gesehen, ihr Durchmesser dk mit zunehmendem Abstand zur Zapfenöffnung 4 und/oder zur Innenschulter 13 verkleinert. Ferner ist die Neigung beider konischen Flächen in Bezug auf die Mittellängsachse 5 und/oder die axiale Richtung x insbesondere gleich. Durch die konische Ausbildung der Innenumfangsfläche 6 und der Außenumfangsfläche 14 kann das Gehäuse 2 mit seiner Innenumfangsfläche 6 zwar axiale Kräfte vom Verschlussring 12 aufnehmen, allerdings ist der Verschlussring 12 nicht mit seiner der Zapfenöffnung 4 abgewandten Stirnseite 26 unmittelbar axial am Gehäuse 2 abgestützt, sodass der Verschlussring 12 immer noch weit genug in den Ringraum 9 eingedrückt werden kann. Abgesehen von diesen Unterschieden stimmt die dritte Ausführungsform mit der ersten Ausführungsform überein, sodass zur weiteren Beschreibung der dritten Ausführungsform auf die Beschreibung der ersten Ausführungsform verwiesen wird.

### Bezugszeichen

- 1: Kugelgelenk
- 2: Gehäuse
- 3: Innenraum des Gehäuses
- 4: Zapfenöffnung des Gehäuses
- 5: Mittellängsachse
- 6: Innenumfangsfläche des Gehäuses
- 7: Kugelschale
- 8: Überdeckungsbereich der Kugelschale
- 9: Ringraum
- 10: Gelenkkugel des Kugelzapfens
- 11: Kugelzapfen
- 12: Verschlussring
- 13: Innenschulter des Gehäuses
- 14: Außenumfangsfläche des Verschlussrings
- 15: Anlagebereich des Überdeckungsbereichs
- 16: Anlagefläche des Verschlussrings
- 17: Trennfuge des Verschlussrings
- 18: Öffnungsfläche des Verschlussrings
- 19: Querschnittsfläche des Verschlussrings
- 20: Raumwinkel / Kegel
- 21: hohlkugelförmiger Lagerraum der Kugelschale
- 22: Durchtrittsöffnung der Kugelschale
- 23: Ringnut
- 24: Nutwand der Ringnut
- 25: Sicke
- 26: axiale Stirnseite des Verschlussrings
- c: Abstand
- dr: radiale Dicke der Kugelschale
- dq: Dicke der Kugelschale quer zur Mittellängsachse
- dk: Konusdurchmesser
- M: Mittelpunkt der Gelenkkugel
- x: axiale Richtung

## Patentansprüche

1. Kugelgelenk mit einem einen Innenraum (3) und eine Zapfenöffnung (4) umfassenden Gehäuse (2), dessen Innenraum (3) in einem der Zapfenöffnung (4) zugewandten Bereich eine um eine axiale Mittellängsachse (5) herum verlaufende Innenumfangsfläche (6) aufweist, einer in dem Innenraum (3) angeordneten und zu der Zapfenöffnung (4) hin offenen Kugelschale (7), die auf ihrer der Zapfenöffnung (4) zugewandten Seite einen Überdeckungsbereich (8) aufweist, der in Richtung der Zapfenöffnung (4) gegenüber der Mittellängsachse (5) nach innen geneigt ist und zusammen mit der Innenumfangsfläche (6) des Gehäuses (2) einen Ringraum (9) begrenzt, einem eine Gelenkkugel (10) umfassenden Kugelzapfen (11), der mit seiner Gelenkkugel (10) bewegbar in der Kugelschale (7) gelagert ist und sich durch die Zapfenöffnung (4) hindurch aus dem Gehäuse (2) heraus erstreckt, und einem in den Ringraum (9) eingesetzten und axial zwischen der Kugelschale (7) und einer im Bereich der Zapfenöffnung (4) vorgesehenen Innenschulter (13) des Gehäuses (2) festgelegten Verschlussring (12), der eine an der Innenumfangsfläche (6) des Gehäuses (2) anliegende Außenumfangsfläche (14) und eine an einem Anlagebereich (15) des Überdeckungsbereichs (8) der Kugelschale (7) anliegende und in Richtung der Zapfenöffnung (4) gegenüber der Mittellängsachse (5) nach innen geneigte Anlagefläche (16) aufweist, **dadurch gekennzeichnet, dass** der als offener Ring ausgebildete Verschlussring (12) eine der Zapfenöffnung (4) zugewandte und in Richtung der Zapfenöffnung (4) gegenüber der Mittellängsachse (5) nach außen geneigte, freie Öffnungsfläche (18) aufweist, wobei die Innenschulter (13) des Gehäuses (2) außerhalb eines durch die Öffnungsfläche (18) des Verschlussrings (12) definierten Raumwinkels oder fiktiven Kegels (20) liegt.

2. Kugelgelenk nach Anspruch 1, **dadurch gekennzeichnet, dass** die Kugelschale (7) nach dem Festlegen des Verschlussrings (12) zwischen der Kugelschale (7) und der Innenschulter (13) des Gehäuses (2) einem Temperverfahren unterzogen worden ist.

3. Kugelgelenk nach Anspruch 1 oder 2, **dadurch gekennzeichnet, dass** das Dickenprofil der Kugelschale (7) derart gewählt ist, dass bei einer Hauptbelastung der Kugelschale (7) in einer quer zur Mittelängsachse (5) verlaufenden Richtung die Belastung der Kugelschale (7) im Überdeckungsbereich (8) und/oder im Anlagebereich (15) reduziert ist.

4. Kugelgelenk nach einem der vorangehenden Ansprüche, **dadurch gekennzeichnet, dass** entlang der Mittellängsachse (5) die Kugelschale (7) im Überdeckungsbereich (8) und/oder im Anlagebereich (15) eine konstante oder annähernd konstante Dicke in einer Hauptbelastungsrichtung aufweist.

5. Kugelgelenk nach einem der vorangehenden Ansprüche, **dadurch gekennzeichnet, dass** entlang der Mittellängsachse (5) die Kugelschale (7) im Anlagebereich (15) eine konstante oder annähernd konstante Dicke (dq) quer zur Mittellängsachse (5) aufweist.

6. Kugelgelenk nach einem der vorangehenden Ansprüche, **dadurch gekennzeichnet, dass** die bezüglich des Mittelpunkts (M) der Gelenkkugel (10) radiale Dicke (dr) der Kugelschale (7) mit abnehmendem axialem Abstand zur Zapfenöffnung (4) abnimmt.

7. Kugelgelenk nach einem der vorangehenden Ansprüche, **dadurch gekennzeichnet, dass** der Verschlussring (12) im Querschnitt keilförmig oder dreieckig ausgebildet ist.

8. Kugelgelenk nach einem der vorangehenden Ansprüche, **dadurch gekennzeichnet, dass** in der Anlagefläche (16) des Verschlussrings (12) Sicken (25) vorgesehen sind, in welche die Kugelschale (7) eingreift.

9. Kugelgelenk nach einem der vorangehenden Ansprüche, **dadurch gekennzeichnet, dass** der Verschlussring (12) aus einem Drahtprofil hergestellt ist.

10. Kugelgelenk nach einem der vorangehenden Ansprüche, **dadurch gekennzeichnet, dass** der Verschlussring (12) auf seiner der Zapfenöffnung (4) abgewandten Seite oder Stirnseite (26) axial nicht am Gehäuse (2) anliegt.

11. Verwendung eines Verschlussrings für ein Kugelgelenk mit einem einen Innenraum (3) und eine Zapfenöffnung (4) umfassenden Gehäuse (2), dessen Innenraum (3) in einem der Zapfenöffnung (4) zugewandten Bereich eine um eine axiale Mittellängsachse (5) herum verlaufende Innenumfangsfläche (6) aufweist, einer in dem Innenraum (3) angeordneten und zu der Zapfenöffnung (4) hin offenen Kugelschale (7), die auf ihrer der Zapfenöffnung (4) zugewandten Seite einen Überdeckungsbereich (8) aufweist, der in Richtung der Zapfenöffnung (4) gegenüber der Mittellängsachse (5) nach innen geneigt ist und zusammen mit der Innenumfangsfläche (6) des Gehäuses (2) einen Ringraum (9) begrenzt, und einem eine Gelenkkugel (10) umfassenden Kugelzapfen (11), der mit seiner Gelenkkugel (10) bewegbar in der Kugelschale (7) gelagert ist und sich durch die Zapfenöffnung (4) hindurch aus dem Gehäuse (2) heraus erstreckt, wobei der Verschlussring (12) in den Ringraum (9) eingesetzt und axial zwischen der Kugelschale (7) und einer im Bereich der Zapfenöffnung (4) vorgesehenen Innenschulter (13) des Gehäuses (2) festgelegt ist oder wird, und wobei der Verschlussring (12) eine an der Innenumfangsfläche (6) des Gehäuses (2) anliegende Außenumfangsfläche (14) und eine an einem Anlagebereich (15) des Überdeckungsbereichs (8) der Kugelschale (7) anliegende und in Richtung der Zapfenöffnung (4) gegenüber der Mittellängsachse (5) nach innen geneigte Anlagefläche (16) aufweist, **dadurch gekennzeichnet, dass** der als offener Ring ausgebildete Verschlussring (12) eine der Zapfenöffnung (4) zugewandte und in Richtung der Zapfenöffnung (4) gegenüber der Mittellängsachse (5) nach außen geneigte, freie Öffnungsfläche (18) aufweist, wobei die Innenschulter (13) des Gehäuses (2) außerhalb eines durch die Öffnungsfläche (18) des Verschlussrings (12) definierten Raumwinkels oder fiktiven Kegels (20) liegt.

12. Verwendung nach Anspruch 11, **dadurch gekennzeichnet, dass** die Kugelschale (7) nach dem Festlegen des Verschlussrings (12) zwischen der Kugelschale (7) und der Innenschulter (13) des Gehäuses (2) einem Temperverfahreh unterzogen wird.

13. Verwendung nach Anspruch 11, **dadurch gekennzeichnet, dass** beim Einsetzen und/oder Festlegen des Verschlussrings (12) die Kugelschale (7) verformt wird, sodass die Gelenkkugel (10) in der Kugelschale (7) verklemmt wird, wonach die Kugelschale (7) einem Temperverfahren unterzogen wird, wodurch die Verklemmung der Gelenkkugel (10) wieder aufgehoben wird.

## Claims

1. Ball joint having a housing (2) which comprises an interior space (3) and a pivot opening (4), the interior space (3) of which housing (2) has, in a region which faces the pivot opening (4), an inner circumferential face (6) which runs around an axial centre longitudinal axis (5), having a ball socket (7) which is arranged in the interior space (3) is open towards the pivot opening (4) and, on its side which faces the pivot opening (4), has an overlap region (8) which is inclined inwards with respect to the centre longitudinal axis (5) in the direction of the pivot opening (4) and, together with the inner circumferential face (6) of the housing (2), delimits an annular space (9), having a ball pivot (11) which comprises a joint ball (10), is mounted movably in the ball socket (7) by way of its joint ball (10), and extends out of the housing (2) through the pivot opening (4), and having a lock ring (12) which is inserted into the annular space (9) and is fixed axially between the ball socket (7) and an inner shoulder (13) of the housing (2), which inner shoulder (13) is provided in the region of the pivot opening (4), which lock ring (12) has an outer circumferential face (14) which bears against the inner circumferential face (6) of the housing (2) and a bearing face (16) which bears against a bearing region (15) of the overlap region (8) of the ball socket (7) and is inclined inwards with respect to the centre longitudinal axis (5) in the direction of the pivot opening (4), **characterized in that** the lock ring (12) which is configured as an open ring has a free opening face (18) which faces the pivot opening (4) and is inclined outwards with respect to the centre longitudinal axis (5) in the direction of the pivot opening (4), the inner shoulder (13) of the housing (2) lying outside an imaginary cone (20) or a spatial angle which is defined by way of the opening face (18) of the lock ring (12).

2. Ball joint according to Claim 1, **characterized in that** the ball socket (7) has been subjected to a tempering process after the fixing of the lock ring (12) between the ball socket (7) and the inner shoulder (13) of the housing (2).

3. Ball joint according to Claim 1 or 2, **characterized in that** the thickness profile of the ball socket (7) is selected in such a way that, in the case of a main load of the ball socket (7) in a direction which runs transversely with respect to the centre longitudinal axis (5), the load of the ball socket (7) is reduced in the overlap region (8) and/or in the bearing region (15).

4. Ball joint according to one of the preceding claims, **characterized in that**, along the centre longitudinal axis (5), the ball socket (7) has a constant or approximately constant thickness in a main load direction in the overlap region (8) and/or in the bearing region (15).

5. Ball joint according to one of the preceding claims, **characterized in that**, along the centre longitudinal axis (5), the ball socket (7) has a constant or approximately constant thickness (dq) transversely with respect to the centre longitudinal axis (5) in the bearing region (15).

6. Ball joint according to one of the preceding claims, **characterized in that** the radial thickness (dr) of the ball socket (7) with regard to the centre point (M) of the joint ball (10) decreases at a decreasing axial spacing from the pivot opening (4).

7. Ball joint according to one of the preceding claims, **characterized in that** the lock ring (12) is of wedge-shaped or triangular configuration in cross section.

8. Ball joint according to one of the preceding claims, **characterized in that** beads (25), into which the ball socket (7) engages, are provided in the bearing face (16) of the lock ring (12).

9. Ball joint according to one of the preceding claims, **characterized in that** the lock ring (12) is manufactured from a wire profile.

10. Ball joint according to one of the preceding claims, **characterized in that**, on its side or end side (26) which faces away from the pivot opening (4), the lock ring (12) does not bear axially against the housing (2).

11. Use of a lock ring for a ball joint having a housing (2) which comprises an interior space (3) and a pivot opening (4), the interior space (3) of which housing (2) has, in a region which faces the pivot opening (4), an inner circumferential face (6) which runs around an axial centre longitudinal axis (5), having a ball socket (7) which is arranged in the interior space (3), is open towards the pivot opening (4) and, on its side which faces the pivot opening (4), has an overlap region (8) which is inclined inwards with respect to the centre longitudinal axis (5) in the direction of the pivot opening (4) and, together with the inner circumferential face (6) of the housing (2), delimits an annular space (9), and having a ball pivot (11) which comprises a joint ball (10), is mounted movably in the ball socket (7) by way of its joint ball (10), and extends out of the housing (2) through the pivot opening (4), the lock ring (12) being inserted into the annular space (9) and being fixed axially between the ball socket (7) and an inner shoulder (13) of the housing (2), which inner shoulder (13) is provided in the region of the pivot opening (4), and the lock ring (12) having an outer circumferential face (14) which bears against the inner circumferential face (6) of the housing (2) and a bearing face (16) which bears against a bearing region (15) of the overlap region (8) of the ball socket (7) and is inclined inwards with respect to the centre longitudinal axis (5) in the direction of the pivot opening (4), **characterized in that** the lock ring (12) which is configured as an open ring has a free opening face (18) which faces the pivot opening (4) and is inclined outwards with respect to the centre longitudinal axis (5) in the direction of the pivot opening (4), the inner shoulder (13) of the housing (2) lying outside an imaginary cone (20) or a spatial angle which is defined by way of the opening face (18) of the lock ring (12).

12. Use according to Claim 11, **characterized in that** the ball socket (7) is subjected to a tempering process after the fixing of the lock ring (12) between the ball socket (7) and the inner shoulder (13) of the housing (2).

13. Use according to Claim 11, **characterized in that** the ball socket (7) is deformed during the insertion and/or fixing of the lock ring (12), with the result that the joint ball (10) is clamped in the ball socket (7), after which the ball socket (7) is subjected to a tempering process, as a result of which the clamping action of the joint ball (10) is cancelled again.

## Revendications

1. Articulation à rotule comprenant un boîtier (2) comportant un espace intérieur (3) et une ouverture de tourillon (4), boîtier dont l'espace intérieur (3) comprend, dans une région tournée vers l'ouverture de tourillon (4), une surface périphérique intérieure (6) s'étendant autour d'un axe longitudinal médian axial (5), une calotte sphérique (7) disposée dans l'espace intérieur (3) et ouverte sur l'ouverture de tourillon (4), laquelle calotte sphérique comprend, sur son côté tourné vers l'ouverture de tourillon (4), une région de recouvrement (8) qui est inclinée vers l'intérieur par rapport à l'axe longitudinal médian (5) en direction de l'ouverture de tourillon (4) et qui délimite un espace annulaire (9) conjointement avec la surface périphérique intérieure (6) du boîtier (2), un tourillon à rotule (11) comportant une rotule d'articulation (10), lequel tourillon est monté mobile dans la calotte sphérique (7) par sa rotule d'articulation (10) et s'étend à travers l'ouverture de tourillon (4) hors du boîtier (2), et une bague de fermeture (12) insérée dans l'espace annulaire (9) et fixée axialement entre la calotte sphérique (7) et un épaulement intérieur (13) du boîtier (2) prévu dans la région de l'ouverture de tourillon (4), laquelle bague de fermeture comprend une surface périphérique extérieure (14) s'appuyant contre la surface périphérique intérieure (6) du boîtier (2) et une surface d'appui (16) s'appuyant contre une région d'appui (15) de la région de recouvrement (8) de la calotte sphérique (7) et inclinée vers l'intérieur par rapport à l'axe longitudinal médian (5) en direction de l'ouverture de tourillon (4), **caractérisée en ce que** la bague de fermeture (12) réalisée sous forme de bague ouverte comprend une surface d'ouverture libre (18) tournée vers l'ouverture de tourillon (4) et inclinée vers l'extérieur par rapport à l'axe longitudinal médian (5) en direction de l'ouverture de tourillon (4), l'épaulement intérieur (13) du boîtier (2) se situant à l'extérieur d'un angle solide ou cône fictif (20) défini par la surface d'ouverture (18) de la bague de fermeture (12).

2. Articulation à rotule selon la revendication 1, **caractérisée en ce que** la calotte sphérique (7) est soumise à un processus de trempe après la fixation de la bague de fermeture (12) entre la calotte sphérique (7) et l'épaulement intérieur (13) du boîtier (2).

3. Articulation à rotule selon la revendication 1 ou 2, **caractérisée en ce que** le profil d'épaisseur de la calotte sphérique (7) est sélectionné de telle sorte que lors d'une charge principale de la calotte sphérique (7) dans une direction s'étendant transversalement à l'axe longitudinal médian (5), la charge de la calotte sphérique (7) est réduite dans la région de recouvrement (8) et/ou dans la région d'appui (15).

4. Articulation à rotule selon l'une des revendications précédentes, **caractérisée en ce que** la calotte sphérique (7) présente, le long de l'axe longitudinal médian (5), une épaisseur constante ou approximativement constante dans une direction de charge principale dans la région de recouvrement (8) et/ou dans la région d'appui (15).

5. Articulation à rotule selon l'une des revendications précédentes, **caractérisée en ce que** la calotte sphérique (7) présente, le long de l'axe longitudinal médian (5), une épaisseur (dq) constante ou approximativement constante transversalement à l'axe longitudinal médian (5) dans la région d'appui (15).

6. Articulation à rotule selon l'une des revendications précédentes, **caractérisée en ce que** l'épaisseur (dr) de la calotte sphérique (7) radiale par rapport au centre (M) de la rotule d'articulation (10) diminue au fur et à mesure que la distance axiale à l'ouverture de tourillon (4) diminue.

7. Articulation à rotule selon l'une des revendications précédentes, **caractérisée en ce que** la bague de fermeture (12) est de forme cunéiforme ou triangulaire en section transversale.

8. Articulation à rotule selon l'une des revendications précédentes, **caractérisée en ce que** des moulures (25) sont prévues dans la surface d'appui (16) de la bague de fermeture (12), moulures dans lesquelles vient en prise la calotte sphérique (7).

9. Articulation à rotule selon l'une des revendications précédentes, **caractérisée en ce que** la bague de fermeture (12) est fabriquée à partir d'un profilé en fil métallique.

10. Articulation à rotule selon l'une des revendications précédentes, **caractérisée en ce que** la bague de fermeture (12) ne s'appuie pas axialement contre le boîtier (2) sur son côté opposé à l'ouverture de tourillon (4) ou sur son côté frontal (26).

11. Utilisation d'une bague de fermeture pour une articulation à rotule comprenant un boîtier (2) comportant un espace intérieur (3) et une ouverture de tourillon (4), boîtier dont l'espace intérieur (3) comprend, dans une région tournée vers l'ouverture de tourillon (4), une surface périphérique intérieure (6) s'étendant autour d'un axe longitudinal médian axial (5), une calotte sphérique (7) disposée dans l'espace intérieur (3) et ouverte sur l'ouverture de tourillon (4), laquelle calotte sphérique comprend, sur son côté tourné vers l'ouverture de tourillon (4), une région de recouvrement (8) qui est inclinée vers l'intérieur par rapport à l'axe longitudinal médian (5) en direction de l'ouverture de tourillon (4) et qui délimite un espace annulaire (9) conjointement avec la surface périphérique intérieure (6) du boîtier (2), et un tourillon à rotule (11) comportant une rotule d'articulation (10), lequel tourillon est monté mobile dans la calotte sphérique (7) par sa rotule d'articulation (10) et s'étend à travers l'ouverture de tourillon (4) hors du boîtier (2), dans laquelle la bague de fermeture (12) est insérée dans l'espace annulaire (9) et est ou devient fixée axialement entre la calotte sphérique (7) et un épaulement intérieur (13) du boîtier (2) prévu dans la région de l'ouverture de tourillon (4), et dans laquelle la bague de fermeture (12) comprend une surface périphérique extérieure (14) s'appuyant contre la surface périphérique intérieure (6) du boîtier (2) et une surface d'appui (16) s'appuyant contre une région d'appui (15) de la région de recouvrement (8) de la calotte sphérique (7) et inclinée vers l'intérieur par rapport à l'axe longitudinal médian (5) en direction de l'ouverture de tourillon (4), **caractérisée en ce que** la bague de fermeture (12) réalisée sous forme de bague ouverte comprend une surface d'ouverture libre (18) tournée vers l'ouverture de tourillon (4) et inclinée vers l'extérieur par rapport à l'axe longitudinal médian (5) en direction de l'ouverture de tourillon (4), l'épaulement intérieur (13) du boîtier (2) se situant à l'extérieur d'un angle solide ou cône fictif (20) défini par la surface d'ouverture (18) de la bague de fermeture (12).

12. Utilisation selon la revendication 11, **caractérisée en ce que** la calotte sphérique (7) est soumise à un processus de trempe après la fixation de la bague de fermeture (12) entre la calotte sphérique (7) et l'épaulement intérieur (13) du boîtier (2).

13. Utilisation selon la revendication 11, **caractérisée en ce que** lors de l'insertion et/ou de la fixation de la bague de fermeture (12), la calotte sphérique (7) est déformée de telle sorte que la rotule d'articulation (10) soit serrée dans la calotte sphérique (7), après quoi la calotte sphérique (7) est soumise à un processus de trempe, de sorte que le serrage de la rotule d'articulation (10) soit à nouveau supprimé.
